# EUROPEAN PATENT APPLICATION

(11) **EP 4 838 435 A1**
(43) Date of publication of application: **11.11.2026**
(21) Application number: 24918074.6
(22) Date of filing: 05.09.2024
(51) Int. Cl.: G06Q 10/0631, G06F 21/50

(54) **DATA PROCESSING METHOD, APPARATUS AND SYSTEM, AND RELATED DEVICE**

(30) Priority: 19.01.2024 CN 202410084473
(71) Applicant: Huawei Technologies Co., Ltd., Shenzhen, Guangdong 518129 (CN)
(72) Inventor: WANG, Jiangtao, Shenzhen, Guangdong 518129 (CN); WU, Junjie, Shenzhen, Guangdong 518129 (CN)
(74) Representative: Pfenning, Meinig & Partner mbB
(86) International application number: PCT/CN2024/117086
(87) International publication number: WO 2025/152465

(57) **Abstract**

A data processing method includes: obtaining an operating state of a hardware object; and obtaining information about a digital product passport DPP of the hardware object based on the operating state of the hardware object, where the information about the digital product passport DPP includes at least one of the following target information: an energy saving health degree of the hardware object, an energy saving amount of the hardware object, or an energy consumption amount of the hardware object, where the energy saving amount is used to measure at least one of a power consumption saving amount and an energy saving and carbon reduction amount of the hardware object in the operating state, and the energy consumption amount is used to measure at least one of a power consumption level and a carbon consumption amount of the hardware object in the operating state. In this application, an energy saving status of the hardware object is written into the information about the DPP, so that users (for example, operation and maintenance personnel) can accurately identify the energy saving status of the hardware object in real time based on the DPP.

## Description

This application claims priority to Chinese Patent Application No. 202410084473.8, filed with the China National Intellectual Property Administration on January 19, 2024 and entitled "DATA PROCESSING METHOD, APPARATUS, AND SYSTEM, AND RELATED DEVICE", which is incorporated herein by reference in its entirety.

### TECHNICAL FIELD

This application relates to the field of computer technologies, and in particular, to a data processing method, apparatus, and system, and a related device.

### BACKGROUND

Digital product passports (Digital product passport, DPP) are used to record product-related information, enabling electronic registration, processing, and sharing of the product-related information among supply chain enterprises, management agencies, and consumers.

Driven by policies, promoting digitalization, intelligence, and green development, energy saving and emission reduction technologies in the IT industry are advancing rapidly. Users are increasingly focusing on energy saving and lower electricity costs, environmental protection, recycling, and carbon reduction evaluation for hardware objects (such as IT devices). Users can learn of accurate energy saving statuses of the hardware objects to manage and improve energy saving of the devices, or determine whether the hardware needs to be retired or replaced.

Therefore, there is an urgent need for a method for identifying an energy saving status of a hardware object.

### SUMMARY

This application provides a data processing method, to write an energy saving status of a hardware object into information about a digital product passport, so as to monitor an energy saving status and identify an energy saving opportunity during actual operating of the hardware object, so that users (for example, operation and maintenance personnel) can accurately identify the energy saving status of the hardware object. In addition, this application further provides a corresponding apparatus, a data processing system, a computer-readable storage medium, and a computer program product.

According to a first aspect, this application provides a data processing method, specifically including: obtaining an operating state of a hardware object; and obtaining information about a digital product passport DPP of the hardware object based on the operating state of the hardware object, where the information about the digital product passport DPP includes at least one of the following target information: an energy saving health degree of the hardware object, used to measure an energy efficiency level of the hardware object in the operating state; an energy saving amount of the hardware object, used to measure at least one of a power consumption saving amount and an energy saving and carbon reduction amount of the hardware object in the operating state; or an energy consumption amount of the hardware object, used to measure at least one of a power consumption level and a carbon consumption amount of the hardware object in the operating state.

In this embodiment of this application, an energy saving status of the hardware object is written into the information about the digital product passport. The energy saving status can be monitored and the energy saving and carbon reduction amount can be calculated during actual operating of the hardware object, so that a user (for example, operation and maintenance personnel) can accurately identify the energy saving status of the hardware object, support design and optimization of an operation and maintenance energy saving measure, and provide technical support for unified management of computing power and computing efficiency of IT devices in a data center and a supercomputing center. In addition, an energy saving and carbon reduction indicator can provide foundational data for the user to calculate a carbon emission amount and a carbon reduction amount during operating of the device, facilitating to calculate an annual indicator.

The carbon emission amount may be a carbon dioxide emission amount generated per unit area or per unit energy within per unit time.

In a possible implementation, the information about the digital product passport DPP specifically includes a mapping relationship between an identifier of the hardware object and the target information.

In a possible implementation, the power consumption saving amount is specifically reduction in power consumption of the hardware object in the operating state compared with being in a first state; or
the energy saving and carbon reduction amount is specifically reduction in energy consumption and carbon emission of the hardware object in the operating state compared with being in the first state; or
the power consumption level is specifically a difference of power consumption of the hardware object in the operating state compared with being in a second state; or
the carbon consumption amount is specifically a difference of carbon consumption of the hardware object in the operating state compared with being in the second state; and
the first state is a maximum power consumption state (which may also be referred to as power consumption in a non-energy saving state) of the hardware object, and the second state is a minimum power consumption state of the hardware object.

In a possible implementation, the operating state is an energy saving measure enabled on the hardware object; and the obtaining the information about the digital product passport DPP of the hardware object based on the operating state of the hardware object includes: obtaining the energy saving amount of the hardware object based on an energy saving amount generated by the enabled energy saving measure.

In a possible implementation, the operating state is actual power consumption of the hardware object; and
the energy saving health degree is calculated based on the actual power consumption and the minimum power consumption at which the hardware object in the operating state is operable.

In a possible implementation, an energy saving amount generated by enabling each energy saving measure may be determined in advance, to construct a mapping relationship between the energy saving measure and the corresponding energy saving amount. The mapping relationship may be in a form of a table, a graph, a function mapping, an AI model, or the like. This is not limited in embodiments of this application. After the energy saving measure enabled on the hardware object is obtained, an energy saving amount of the enabled energy saving measure may be obtained.

In a possible implementation, the operating state is the actual power consumption of the hardware object; and the obtaining the information about the digital product passport DPP of the hardware object based on the operating state of the hardware object includes: obtaining the information about the digital product passport DPP of the hardware object based on the actual power consumption and the minimum power consumption or maximum power consumption at which the hardware object in the operating state is operable.

In a possible implementation, the energy saving and carbon reduction amount is calculated based on the power consumption saving amount and a carbon emission coefficient; or the carbon consumption amount is calculated based on the power consumption level and a carbon emission coefficient.

The carbon emission coefficient is calculated by correlating energy consumption to a carbon dioxide emission amount. The carbon emission coefficient varies with different energy. For example, a carbon emission coefficient of coal is high while a carbon emission coefficient of natural gas is low.

In a possible implementation, the hardware object includes multiple electronic components, the energy saving health degree is an aggregation of energy saving health degrees of the multiple electronic components, the energy saving amount is an aggregation of energy saving amounts of the multiple electronic components, and the energy consumption amount is an aggregation of energy consumption amounts of the multiple electronic components.

In a possible implementation, the method further includes:
presenting the information about the digital product passport DPP; or
storing the information about the digital product passport DPP; or
sending the information about the digital product passport DPP to a server or a terminal device; or
when the energy saving health degree is lower than a first threshold, the energy saving amount is lower than a second threshold, or the energy consumption amount is higher than a third threshold, performing an energy saving operation for the hardware object.

In a possible implementation, before the obtaining the first information, the method further includes: receiving an instruction, where the instruction instructs to generate or query the information about the digital product passport DPP of the hardware object.

According to a second aspect, this application provides a data processing apparatus. The data processing apparatus includes:
an obtaining module, configured to obtain an operating state of a hardware object; and
a processing module, configured to obtain information about a digital product passport DPP of the hardware object based on the operating state of the hardware object, where the information about the digital product passport DPP includes at least one of the following target information:
   an energy saving health degree of the hardware object, used to measure an energy efficiency level of the hardware object in the operating state;
   an energy saving amount of the hardware object, used to measure at least one of a power consumption saving amount and an energy saving and carbon reduction amount of the hardware object in the operating state; or
   an energy consumption amount of the hardware object, used to measure at least one of a power consumption level and a carbon consumption amount of the hardware object in the operating state.

In a possible implementation, the information about the digital product passport DPP specifically includes a mapping relationship between an identifier of the hardware object and the target information.

In a possible implementation, the power consumption saving amount is specifically reduction in power consumption of the hardware object in the operating state compared with being in a first state; or
the energy saving and carbon reduction amount is specifically reduction in energy consumption and carbon emission of the hardware object in the operating state compared with being in the first state; or
the power consumption level is specifically a difference of power consumption of the hardware object in the operating state compared with being in a second state; or
the carbon consumption amount is specifically a difference of carbon consumption of the hardware object in the operating state compared with being in the second state; and
the first state is a maximum power consumption state of the hardware object, and the second state is a minimum power consumption state of the hardware object.

In a possible implementation, the operating state is an energy saving measure enabled on the hardware object; and
the processing module is specifically configured to:
obtain the energy saving amount of the hardware object based on an energy saving amount generated by the enabled energy saving measure.

In a possible implementation, the operating state is actual power consumption of the hardware object; and
the processing module is specifically configured to:
obtain the information about the digital product passport DPP of the hardware object based on the actual power consumption and minimum power consumption or maximum power consumption at which the hardware object in the operating state is operable.

In this way, based on the actual power consumption of the hardware object and the minimum power consumption or the maximum power consumption of the hardware object in the operating state, the energy saving status used to measure an energy saving level of the hardware object can be calculated, thereby implementing real-time online evaluation on the energy saving level of the hardware object.

In a possible implementation, the energy saving and carbon reduction amount is calculated based on the power consumption saving amount and a carbon emission coefficient; or the carbon consumption amount is calculated based on the power consumption level and a carbon emission coefficient.

In a possible implementation, the hardware object includes multiple electronic components, the energy saving health degree is an aggregation of energy saving health degrees of the multiple electronic components, the energy saving amount is an aggregation of energy saving amounts of the multiple electronic components, and the energy consumption amount is an aggregation of energy consumption amounts of the multiple electronic components.

In a possible implementation, the apparatus further includes:
a presentation module, configured to present the information about the digital product passport DPP; or
the processing module, further configured to store the information about the digital product passport DPP; or
a transceiver module, configured to send the information about the digital product passport DPP to a server or a terminal device; or
the processing module, further configured to: when the energy saving health degree is lower than a first threshold, the energy saving amount is lower than a second threshold, or the energy consumption amount is higher than a third threshold, perform an energy saving operation for the hardware object.

In a possible implementation, the transceiver module is further configured to: before obtaining the first information, receive an instruction, where the instruction instructs to generate or query the information about the digital product passport DPP of the hardware object.

According to a third aspect, this application provides a data processing system. The data processing system includes a processor, a memory, and a display (it should be understood that the display is optional). The processor and the memory communicate with each other. The processor is configured to execute instructions stored in the memory, to enable the data processing system to perform the data processing method according to any one of the first aspect or the implementations of the first aspect. It should be noted that the memory may be integrated into the processor, or may be independent of the processor. The data processing system may further include a bus. The processor is connected to the memory through the bus. The memory may include a readable memory and a random access memory.

According to a fourth aspect, this application provides a computer-readable storage medium. The computer-readable storage medium stores instructions. When the instructions are run on a computing device, the computing device is enabled to perform an operation step in the data processing method according to any one of the first aspect or the implementations of the first aspect.

According to a fifth aspect, this application provides a computer program product including instructions. When the computer program product runs on a computing device, the computing device is enabled to perform an operation step in the data processing method according to any one of the first aspect or the implementations of the first aspect.

In this application, based on the implementations provided in the foregoing aspects, the implementations may further be combined to provide more implementations.

### BRIEF DESCRIPTION OF DRAWINGS

FIG. 1A is a diagram of an example application scenario according to this application;
FIG. 1B is a diagram of an example application scenario according to this application;
FIG. 1C is a diagram of an example application scenario according to this application;
FIG. 2 is a schematic flowchart of a data processing method according to this application;
FIG. 3 is a diagram of calculating an energy saving health degree of a device based on an energy saving health degree of an electronic component according to this application;
FIG. 4 is a schematic flowchart of a method for training an AI model according to this application;
FIG. 5 is a diagram of determining minimum power consumption in each historical operating state through state projection according to this application;
FIG. 6 is a diagram of an energy saving health degree change curve of a hardware object according to this application;
FIG. 7 is a diagram of a structure of a data processing apparatus according to this application; and
FIG. 8 is a diagram of a structure of a data processing system according to this application.

### DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

Terms "substantially (substantially)", "about (about)", and the like are used herein as approximation terms rather than as degree terms, and are intended to take into account inherent deviations of measured values or computed values that are known to a person of ordinary skill in the art. In addition, when embodiments of this application are described, "may (may)" is used to mean "one or more possible embodiments". Terms "use (use)", "using (using)", and "used (used)" used herein may be considered to be synonymous with terms "utilize (utilize)", "utilizing (utilizing)", and "utilized (utilized)", respectively. In addition, a term "example (exemplary)" is intended to refer to an example or illustration.

The following describes technical solutions of this application with reference to accompanying drawings.

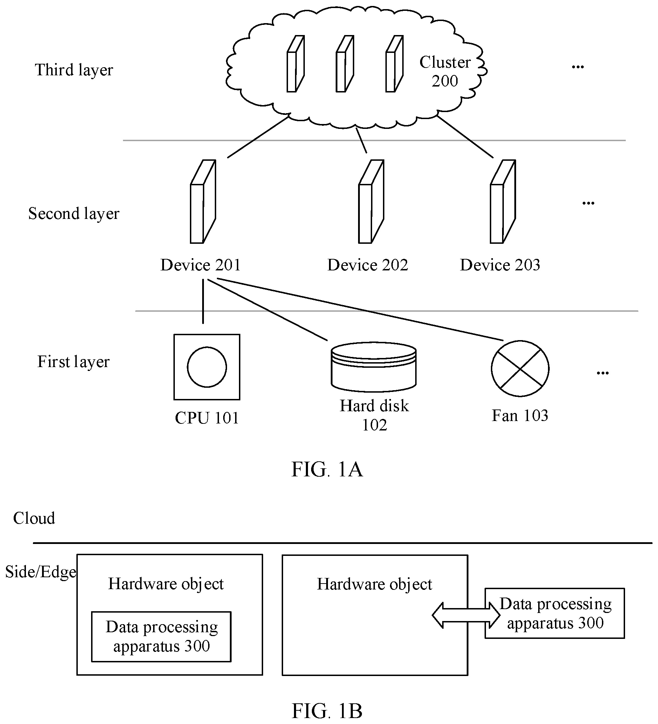

FIG. 1A is a diagram of an example application scenario according to this application. In the application scenario shown in FIG. 1A, there are multiple layers of hardware objects. For example, the layers of the hardware objects may be defined by the granularity of a product form to which the hardware object belongs in an actual application scenario, or by a service range of the object. This is not limited herein. FIG. 1A is described by using three layers of hardware objects as an example. A first-layer hardware object is an electronic component, for example, a central processing unit (central processing unit, CPU) 101, a hard disk 102, and a fan 103 shown in FIG. 1A. Different electronic components may communicate with each other through a bus, for example, communicate with each other through one or more of a compute fast link (compute express link, CXL) bus, a peripheral component interconnect express (peripheral component interconnect express, PCIE) bus, an inter-integrated circuit (inter-integrated circuit, I2C) bus, and a unified bus (unified bus, UB, or Ubus). A second-layer hardware object is a device, for example, a device 201, a device 202, and a device 203 shown in FIG. 1A. The device may be a computing server, a storage server, a terminal, or the like. The second-layer hardware object may include multiple first-layer hardware objects. For example, the device 201 may include the CPU 101, the hard disk 102, the fan 103, and the like. Different devices may communicate with each other over a wired network, or may communicate with each other over a wireless network. A third-layer hardware object is a cluster, for example, a cluster 200 shown in FIG. 1A. The cluster may include multiple devices. In FIG. 1A, an example in which the cluster 200 includes the device 201, the device 202, and the device 203 is used for description. In actual application, the cluster 200 may be a data center including multiple computing devices, or may be an availability zone (availability zones, AZ) including multiple computing devices, or may be a region (region) including multiple computing devices, or the like. This is not limited in embodiments. Each AZ includes one data center or multiple data centers that are geographically close, and generally, one region may include multiple AZs. When the third-layer hardware object includes multiple clusters, different clusters may communicate with each other over a wired network or a wireless network.

Driven by policies, promoting digitalization, intelligence, and green development, energy saving and emission reduction technologies in the IT industry are advancing rapidly. Users are increasingly focusing on energy saving and lower electricity costs, environmental protection, recycling, and carbon reduction evaluation for hardware objects (such as IT devices). Users can learn of accurate energy saving statuses of the hardware objects to manage and improve energy saving of the devices, or determine whether the hardware needs to be retired or replaced.

Therefore, there is an urgent need for a method for identifying the energy saving status of the hardware object.

Based on this, in this application, a data processing apparatus 300 is additionally disposed in the application scenario shown in FIG. 1A. The data processing apparatus 300 may calculate an energy saving status (for example, an energy saving health degree or an energy saving amount) of the hardware object based on information (for example, information related to power consumption) about the hardware object, and write the energy saving status into information about a digital product passport (digital product passport, DPP). Users may learn of the energy saving status of the hardware device by reading the information about the DPP.

The hardware object may be any-layer object in FIG. 1A. In addition, the data processing apparatus 300 evaluates the energy saving status of the hardware object based on the information (for example, the information related to power consumption) about the hardware object, and does not need to impose additional load on the hardware object. Therefore, time consumed for evaluating the energy saving status and resource occupation on the hardware object can be effectively reduced, thereby effectively reducing time costs and resource consumption required for data processing.

For example, the data processing apparatus 300 may be implemented by using software, for example, may be implemented by using at least one of a virtual machine, a container, or a computing engine. Alternatively, the data processing apparatus 300 may be implemented by using a physical device including a processor. The processor may be a CPU, and any one or any combination of processors such as an application-specific integrated circuit (application-specific integrated circuit, ASIC), a programmable logic device (programmable logic device, PLD), a complex program logic device (complex programmable logical device, CPLD), a field programmable gate array (field-programmable gate array, FPGA), a general-purpose array logic (generic array logic, GAL), a system on chip (system on chip, SoC), a software-defined architecture (software-defined infrastructure, SDI) chip, an artificial intelligence (artificial intelligence, AI) chip, and a data processing unit (Data processing unit, DPU). In addition, the data processing apparatus 300 may include one or more processors, and may include one or more types of processors. Specifically, the quantity and types of processors may be set according to a service requirement of an actual application. This is not limited in embodiments.

It should be noted that the application scenario shown in FIG. 1A is merely used as an example for description. In actual application, the foregoing data processing method may also be applied to another application scenario. For example, in another possible application scenario, the device 101 may include more electronic components, or the cluster 200 may include more devices, or the like, or the device 101 may be a terminal device, for example, a smartphone or an intelligent terminal (for example, an iPad). This is not limited in embodiments.

The following describes a relationship between a deployment location of the data processing apparatus 300 and a deployment location of the hardware object.

FIG. 1B is a diagram of an architecture. The data processing apparatus 300 may be deployed in the hardware object or deployed on an end side in an associated manner. For example, the data processing apparatus 300 may be used as a software module of the hardware object, or the data processing apparatus 300 may be separately deployed from the hardware object.

For example, a user may generate an instruction by interacting with the hardware object (or directly interacting with the data processing apparatus 300), to trigger the data processing apparatus 300 to calculate an energy saving status (for example, an energy saving health degree or an energy saving amount) of the hardware object based on information (for example, information related to power consumption) of the hardware object, and write the energy saving status into information about a digital product passport (digital product passport, DPP). The hardware object may present the information about the DPP, store the information about the DPP, or send the information about the DPP to a cloud side.

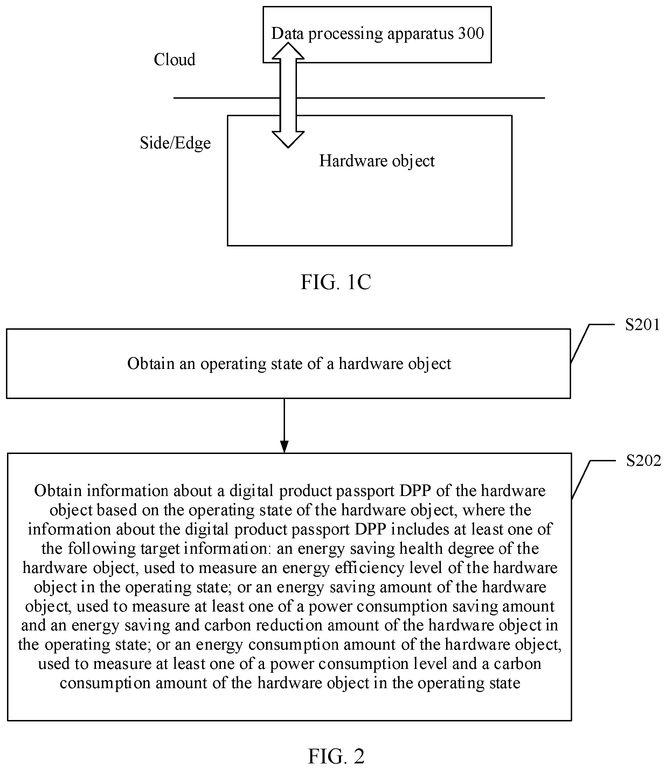

FIG. 1C is a diagram of an architecture. The data processing apparatus 300 may be deployed on a cloud side, for example, may be used as a software module of a cloud side server.

For example, users may trigger interaction between the hardware device and the cloud side server, so that the cloud side server generates an instruction and triggers the data processing apparatus 300 to calculate an energy saving status (for example, an energy saving health degree or an energy saving amount) of the hardware object based on information (for example, information related to power consumption) of the hardware object, and write the energy saving status into information about a digital product passport (digital product passport, DPP). The server may transfer the information about the DPP to an end side or store the information about the DPP.

For ease of understanding, the following describes embodiments of the data processing method provided in this application with reference to the accompanying drawings.

FIG. 2 is a schematic flowchart of a data processing method according to an embodiment of this application. The method may be applied to the application scenarios shown in FIG. 1A to FIG. 1C, or may be applied to another applicable application scenario. A hardware object whose energy efficiency level is evaluated may be the electronic component, the device, or the cluster in FIG. 1A.

The data processing method shown in FIG. 2 may be performed by the data processing apparatus 300 in FIG. 1A. The method may specifically include the following steps.

S201: Obtain an operating state of a hardware object.

In a possible implementation, step 201 may be triggered by a user. For example, the user may trigger a generation instruction, where the instruction instructs to generate or query information about a digital product passport DPP of the hardware object. In this way, the data processing apparatus may obtain the operating state of the hardware object based on the received instruction.

The operating state may be a state related to power consumption of the hardware object.

In a possible implementation, the operating state may be at least one energy saving measure enabled on the hardware object.

An energy-consuming component of the hardware object may have a specific energy saving measure (as shown in Table 1, Table 1 shows main energy-consuming components of a server and corresponding energy saving measures). For example, for a CPU, energy saving may be implemented through frequency scaling, sleeping, or core disabling.

**Table 1**

| Main energy-consuming components of a server | Energy saving measures |
|---|---|
| CPU | DVFS, sleeping, and core disabling |
| Memory | Energy saving mode |
| Hard disk | HDD speed adjustment and sleeping |
| Fan | Rotational speed adjustment |
| PSU | Power supply mode: active/standby and load balancing |

After each energy saving measure is enabled, a specific energy saving amount may be generated for the hardware object. The data processing apparatus 300 may obtain the energy saving amount generated by the energy saving measure enabled on the hardware object. The energy saving amount herein may be an energy saving amount generated when the energy saving measure is enabled compared with that generated when the energy saving measure is disabled (a state of another energy saving measure of the hardware object remains unchanged), for example, an energy saving amount generated when the CPU is in sleep mode compared with that generated when the CPU is not in sleep mode.

It should be understood that the energy saving amount herein may also be related to some operating states (for example, but not limited to one or more of parameters such as CPU utilization, memory utilization, a memory read/write rate, a hard disk read/write rate, and component sensing temperature) of the hardware object. For example, for the hardware object in different operating states, energy saving amounts generated by enabling a same energy saving measure may be different.

The following describes how to obtain the energy saving amount generated by enabling the energy saving measure.

In a possible implementation, an energy saving amount generated by enabling each energy saving measure may be determined in advance, to construct a mapping relationship between the energy saving measure and the corresponding energy saving amount. The mapping relationship may be in a form of a table, a graph, a function mapping, an AI model, or the like. This is not limited in embodiments of this application.

After the energy saving measure enabled on the hardware object is obtained, an energy saving amount of the enabled energy saving measure may be obtained.

In a possible implementation, the operating state of the hardware object may be actual power consumption. For example, data such as the actual power consumption is collected by using a sensor.

The actual power consumption of the hardware object may be, for example, power of the hardware object during operating, or may be a voltage and a current of the hardware object during operating, or may be other data used to represent power consumption of the hardware object.

In a possible implementation, minimum power consumption or maximum power consumption at which the hardware object is capable of operating may be determined based on the operating state of the hardware object. The minimum power consumption or the maximum power consumption may be obtained through inference based on the operating state of the hardware object by using a target model, and the target model is obtained based on an operating state of the hardware object in a historical period of time and historical power consumption data. For example, the target model may be an artificial intelligence AI model, or may be obtained through fitting based on the operating state in the historical period of time and the historical power consumption data.

The following uses the minimum power consumption as an example for description.

After obtaining the operating state of the hardware object, the data processing apparatus 300 may further obtain minimum power consumption at which the hardware object in the operating state is operable, that is, minimum power consumption that can be achieved, and which may also be referred to as ideal power consumption. Minimum power consumption that can be achieved by the hardware object in different operating states may be different. For example, minimum power consumption that can be achieved by the hardware object in an operating state 1 is 100 W (watts), and minimum power consumption that can be achieved in an operating state 2 is 150 W. Alternatively, minimum power consumption that can be achieved by the hardware object in some operating states may be the same. For example, in 10 different possible operating states of the hardware object, minimum power consumption that can be achieved by the hardware object in a 1^{st} operating state is the same as minimum power consumption that can be achieved by the hardware object in a 10^{th} operating state, but is different from minimum power consumption that can be achieved by the hardware object in the other eight operating states. For ease of understanding, this embodiment provides the following several implementation examples of determining the ideal power consumption.

In a first possible implementation, the data processing apparatus 300 may determine, based on power consumption data of the hardware object in a historical period of time, ideal power consumption that is of the hardware object and that corresponds to a current operating state, that is, may guide, based on power consumption of the hardware object in a past period of time, minimum power consumption that can be achieved by the hardware object.

For example, the data processing apparatus 300 may obtain the ideal power consumption through inference by using an AI model. During specific implementation, the data processing apparatus 300 may obtain an AI model that has been trained. The AI model may be, for example, a model constructed based on a neural network model, for example, a model constructed based on a recurrent neural network (recurrent neural network, RNN) or a model constructed based on a deep neural network (deep neural networks, DNN). Alternatively, the AI model may be a regression tree (regression tree) model, a support vector machine (support vector machine, SVM) model, or the like. A specific implementation of the AI model is not limited in this embodiment. A training sample of the AI model may be, for example, minimum power consumption that can be achieved by the hardware object in each operating state in the historical period of time. For a specific implementation process of training the AI model, refer to the following descriptions. Details are not described herein. After obtaining the operating state of the hardware object, the data processing apparatus 300 may input the obtained operating state into the AI model, and perform inference by using the AI model based on the input operating state, to obtain the ideal power consumption that corresponds to the operating state and that is output by the AI model.

Further, the data processing apparatus 300 may further obtain an energy saving control parameter of the hardware object in the operating state, input both the operating state of the hardware object and the energy saving control parameter into the AI model, and obtain the ideal power consumption of the hardware object through inference by using the AI model. In this way, inference is performed based on multiple dimensions of data such as the operating state and the energy saving control parameter, so that accuracy of the determined ideal power consumption can be further improved, and accuracy of subsequently evaluating an energy efficiency level of the hardware object can be further improved.

In a second possible implementation, a mapping relationship between an operating state of the hardware object and ideal power consumption may be configured in the data processing apparatus 300. For example, the mapping relationship may be preconfigured in the data processing apparatus 300 by a skilled person. In this way, after obtaining an operating state of the hardware object, the data processing apparatus 300 may determine, by searching the mapping relationship, ideal power consumption corresponding to the operating state. For example, the hardware object is specifically a CPU. The operating state of the hardware object may be, for example, CPU utilization. In addition, a mapping relationship between the CPU utilization and ideal power consumption may be configured in the data processing apparatus 300. For example, when the CPU utilization is configured to 10%, the ideal power consumption is 100 W; or when the CPU utilization configured to 50%, the ideal power consumption is 300 W. In this way, after obtaining current CPU utilization, the data processing apparatus 300 may determine, by searching the configured mapping relationship, ideal power consumption corresponding to the CPU utilization.

For example, the mapping relationship in the data processing apparatus 300 may be, for example, determined based on minimum power consumption that can be achieved by the hardware object is in each operating state in a historical period of time. For example, the hardware object is specifically a CPU. It is assumed that all utilization of the CPU at multiple moments in past 30 days is 10%, but power consumption generated by the CPU at different moments in the multiple moments is respectively 100 W, 150 W, and 300 W. In this case, minimum power consumption (100 W) may be determined from multiple pieces of power consumption, and a mapping relationship between the CPU utilization (10%) and the minimum power consumption (100 W) is established. In actual application, the mapping relationship in the data processing apparatus 300 may alternatively be determined in another manner. This is not limited in this embodiment.

The foregoing implementations of determining the ideal power consumption are merely used as some examples for description. In another embodiment, the data processing apparatus 300 may alternatively determine the ideal power consumption of the hardware object in the operating state in another manner.

S202: Obtain the information about the digital product passport DPP of the hardware object based on the operating state of the hardware object.

The information about the digital product passport DPP may include target information, the target information may include an energy saving health degree of the hardware object, used to measure an energy efficiency level of the hardware object in the operating state.

For example, the data processing apparatus 300 may calculate the energy saving health degree of the hardware object based on the actual power consumption and the ideal power consumption (that is, the minimum power consumption), where the energy saving health degree is used to measure the energy efficiency level of the hardware object.

It may be understood that the ideal power consumption indicates minimum power consumption that can be achieved by the hardware object in a current operating state, and the minimum power consumption is actual power consumption in a historical period of time, that is, minimum power consumption actually achieved during operating of the hardware object in a past period of time is used as a theoretical value; and the actual power consumption is power consumption actually generated by the hardware object in the current operating state. Therefore, based on the actual power consumption and the ideal power consumption of the hardware object, an energy efficiency level of the hardware object in the current operating state may be reflected. Specifically, when a deviation between the actual power consumption and the ideal power consumption is small, it indicates that current power consumption of the hardware object is small, and the hardware object is in a good energy saving state. Correspondingly, the energy efficiency level of the hardware object is currently in a high state. When a deviation between the actual power consumption and the ideal power consumption is large, the actual power consumption is usually far greater than the ideal power consumption. In this case, current power consumption of the hardware object is excessively high, and a large amount of energy is wasted. Correspondingly, the energy efficiency level of the hardware object is currently in a low state.

In this embodiment, the energy saving health degree may be used to measure the energy efficiency level of the hardware object. The energy saving health degree indicates energy saving effect of the hardware object, that is, may indicate the energy efficiency level of the hardware object. A larger energy saving health degree indicates a higher energy efficiency level of the hardware object. A smaller energy saving health degree indicates a lower energy efficiency level of the hardware object.

In an implementation example, the data processing apparatus 300 may calculate the energy saving health degree of the hardware object according to the following formula (1): ${h}_{1} = 1 - \frac{p - {p}^{⋆}}{p}$ Formula (1)

*h*₁ is the energy saving health degree of the hardware object; *p* is the actual power consumption; and p* is the ideal power consumption.

Alternatively, the data processing apparatus 300 may calculate the energy saving health degree of the hardware object according to the following formula (2): ${h}_{1} = 1 - \frac{p - {p}^{⋆}}{{p}^{⋆}}$ Formula (2)

In this way, the data processing apparatus 300 can calculate the energy saving health degree, to implement online real-time evaluation on the energy efficiency level of the hardware object.

In a possible implementation, the data processing apparatus 300 may calculate an energy saving degree of the hardware object based on the actual power consumption and the maximum power consumption, where the energy saving amount is used to measure at least one of a power consumption saving amount and an energy saving and carbon reduction amount of the hardware object in the operating state.

The power consumption saving amount may be reduction in power consumption of the hardware object in the operating state compared with being in a first state, where the first state is a maximum power consumption state of the hardware object.

The energy saving and carbon reduction amount is specifically reduction in energy consumption and carbon emission of the hardware object in the operating state compared with being in the first state, where the first state is a maximum power consumption state of the hardware object.

For example, the energy saving amount is used to measure the power consumption saving amount of the hardware object in the operating state. A difference between the actual power consumption and power consumption in a non-energy saving state may describe a power saving amount, and the power consumption saving amount may be calculated by accumulating power saving amounts in terms of time.

For example, the data processing apparatus 300 may calculate the power saving amount of the hardware object according to the following formulas (3) and (4): ${h}_{2} = {\sum }_{k = 0}^{n} {P}_{k} ∗ T$ Formula (3) ${P}_{k} = {max}_{{s}_{i}} p \left(\hat{{s}_{ι}}\right) - {p}_{i}$ Formula (4)

*h*₂ is the power saving amount of the hardware object; *pᵢ* is the actual power consumption; ${max}_{{s}_{i}} p \left(\hat{{s}_{ι}}\right)$ is the power consumption in the non-energy saving state; and T is time, for example, T may be a quantity of days included in one year: 365 * 24.

In a possible implementation, an energy saving amount generated by an energy saving measure enabled on the hardware object may be obtained, and a fusion (for example, a summation result) of energy saving amounts generated by enabled energy saving measures may describe the power consumption saving amount, that is, the power consumption saving amount may be determined by using energy saving benefit brought by the energy saving measure enabled on the hardware object.

For example, a power saving amount generated by the energy saving measure enabled on the hardware object may be obtained, and the power consumption saving amount may be calculated by accumulating power saving amounts in terms of time.

For example, the data processing apparatus 300 may calculate the power saving amount of the hardware object according to the following formula (3): ${h}_{2} = {\sum }_{k = 0}^{n} {P}_{k} ∗ T$ Formula (3)

*h*₂ is the power saving amount of the hardware object; and Pₖ is the fusion (for example, the summation result) of the energy saving amounts generated by the enabled energy saving measures.

For example, the energy saving amount is used to measure the energy saving and carbon reduction amount of the hardware object in the operating state. A difference between the actual power consumption and power consumption in a non-energy saving state may describe a power saving amount, and the power consumption saving amount may be calculated by accumulating power saving amounts in terms of time. The power saving amount may be mapped to the energy saving and carbon reduction amount. For example, the energy saving and carbon reduction amount may be calculated based on the power consumption saving amount and a carbon emission coefficient.

For example, the data processing apparatus 300 may calculate the energy saving and carbon reduction amount of the hardware object according to the following formula (5): ${h}_{3} = {\sum }_{k = 0}^{n} {P}_{k} ∗ T ∗ N / 1000$ Formula (5)

*h*₃ is the energy saving and carbon reduction amount of the hardware object; Pₖ is the power saving amount; and N is a carbon emission coefficient at a place at which a device is used, that is, a carbon dioxide weight emitted per kilowatt-hour of electricity consumed.

In a possible implementation, the data processing apparatus 300 may calculate an energy consumption amount of the hardware object based on the actual power consumption and the minimum power consumption, where the energy consumption amount is used to measure at least one of a power consumption level and a carbon consumption amount of the hardware object in the operating state.

The power consumption level may be a difference of power consumption of the hardware object in the operating state compared with being in a second state, where the second state is a minimum power consumption state of the hardware object.

The carbon consumption amount is specifically a difference of carbon consumption of the hardware object in the operating state compared with being in the second state, where the second state is a minimum power consumption state of the hardware object.

For example, the energy consumption amount is used to measure the power consumption level of the hardware object in the operating state. A difference between the actual power consumption and the ideal power consumption (that is, the minimum power consumption) may describe the power consumption level, and the power consumption level may be calculated by accumulating power consumption amounts in terms of time.

For example, the data processing apparatus 300 may calculate the power consumption level of the hardware object according to the following formulas (6) and (7): ${h}_{4} = {\sum }_{k = 0}^{n} {P}_{k} ∗ T$ Formula (6) ${{P}_{k} = {p}_{i} - min p \left(\hat{{s}_{ι}}\right)}_{{s}_{i}}$ Formula (7)

*h*₄ is the power consumption level of the hardware object; *pᵢ* is the actual power consumption; ${min}_{{s}_{i}} p \left(\hat{{s}_{ι}}\right)$ is the ideal power consumption (that is, the minimum power consumption), and T is time, for example, T may be a quantity of days included in one year: 365 ∗ 24.

For example, the energy consumption amount is used to measure the carbon consumption amount of the hardware object in the operating state. A difference between the actual power consumption and the ideal power consumption (that is, the minimum power consumption) may describe a power consumption amount, and the power consumption amount power consumption level may be calculated by accumulating power consumption amounts in terms of time. The power consumption level may be mapped to the carbon consumption amount. For example, the carbon consumption amount may be calculated based on the power consumption level and a carbon emission coefficient.

For example, the data processing apparatus 300 may calculate the carbon consumption amount of the hardware object according to the following formula (8): ${h}_{5} = {\sum }_{k = 0}^{n} {P}_{k} ∗ T ∗ N / 1000$ Formula (8)

*h*₅ is the carbon consumption amount of the hardware object; Pₖ is the power consumption amount; and N is a carbon emission coefficient at a place at which a device is used, that is, a carbon dioxide weight emitted per kilowatt-hour of electricity consumed.

After the target information is obtained, the target information may be written into the information about the digital product passport DPP, where the information about the DPP may include a mapping relationship between an identifier of the hardware object and the second information. The data processing apparatus 300 may further provide a read interface for the user, and support remote periodic upload to a cloud for aggregation and management.

For a diagram of the information about the DPP, refer to Table 2.

**Table 2**

| DPP design example: related fields and parameters | | | | | | |
|---|---|---|---|---|---|---|
| Product data | Indicator | Production time | Energy saving health degree | Energy saving amount | Energy saving and carbon reduction amount | ... |
| | Data | 2023.1.1 | 80% | 300 kWh | 120 kg | ... |

In this embodiment of this application, the energy saving status of the hardware object is written into the information about the digital product passport. The energy saving status can be monitored and the energy saving and carbon reduction amount can be calculated during actual operating of the hardware object, so that a user (for example, operation and maintenance personnel) can accurately identify the energy saving status of the hardware object, support design and optimization of an operation and maintenance energy saving measure, and provide technical support for unified management of computing power and computing efficiency of IT devices in a data center and a supercomputing center. In addition, an energy saving and carbon reduction indicator can provide foundational data for the user to calculate a carbon emission amount and a carbon reduction amount during operating of the device, facilitating to calculate an annual indicator.

Further, the data processing apparatus 300 may further perform the following steps:
presenting the information about the digital product passport DPP; or
storing the information about the digital product passport DPP; or
sending the information about the digital product passport DPP to a server or a terminal device; or
when the energy saving health degree is lower than a first threshold, the energy saving amount is lower than a second threshold, or the energy consumption amount is higher than a third threshold, performing an energy saving operation for the hardware object.

In this way, the user (for example, the operation and maintenance personnel of the hardware object) may learn of the energy saving status of the hardware object based on a presented energy saving state of the hardware object, so that the user learns of energy saving of the hardware object during operating.

In this way, when the energy saving status of the hardware object is lower than a threshold, the data processing apparatus 300 may perform an energy saving operation for the hardware object.

The energy saving health degree is used as an example. It may be understood that when the energy saving health degree of the hardware object is greater than or equal to a threshold (for example, 85%), it indicates that a current energy saving status of the hardware object is good, and a further energy saving operation may not be performed for the hardware object. However, when the energy saving health degree of the hardware object is less than the threshold, it indicates that the current energy saving status of the hardware object is poor, that is, a large amount of energy is wasted during operating of the hardware object. In this case, the data processing apparatus 300 may perform an energy saving operation for the hardware object based on the energy saving health degree, to reduce energy consumption generated during operating of the hardware object and improve an energy efficiency level of the hardware object.

In specific implementation, the data processing apparatus 300 may obtain an energy saving control parameter of the hardware object, generate a new energy saving control parameter based on the energy saving health degree and the energy saving control parameter, and perform an energy saving operation for the hardware object based on the energy saving control parameter.

For example, it is assumed that the hardware object is specifically a CPU, an energy saving health degree of the CPU is 60%, an energy saving control parameter is a frequency of the CPU, and a frequency of the CPU in a current operating state is 3 GHz (gigahertz). Because the energy saving health degree of the CPU is lower than 85% (threshold), the data processing apparatus 300 may calculate, based on the energy saving health degree and the frequency 3 GHz of the CPU in the current operating state, that a frequency that the CPU needs to achieve after frequency reduction is performed on the CPU is 2 GHz. Finally, the data processing apparatus 300 reduces the frequency of the CPU to the calculated 2 GHz. The frequency of the CPU during operating indicates a quantity of synchronization pulses generated by the CPU within one second, and can determine a computing speed of the CPU. Generally, a higher frequency of the CPU indicates a higher computing speed of the CPU, and correspondingly, higher energy consumption of the CPU. On the contrary, a lower frequency of the CPU indicates a lower computing speed of the CPU, and lower energy consumption of the CPU. For another example, when the energy saving health degree of the CPU is 80%, the data processing apparatus 300 may reduce the frequency of the CPU to 2.8 GHz based on the energy saving health degree and the frequency 3 GHz of the CPU in the current operating state.

In this way, the data processing apparatus 300 performs real-time evaluation on the hardware object and automatically performs a corresponding energy saving operation, to avoid missing an energy saving opportunity during operating of the hardware object, and perform an energy saving operation for the hardware object in a timely manner, thereby improving energy saving effect for the hardware object, and keeping an energy efficiency level of the hardware object at a high level.

It should be noted that, when the hardware object is specifically a second-layer device or a third-layer cluster, the data processing apparatus 300 may also calculate, based on the foregoing similar manner, an energy saving health degree corresponding to the device or an energy saving status corresponding to the cluster, to implement real-time evaluation on an energy saving level of the device or the cluster.

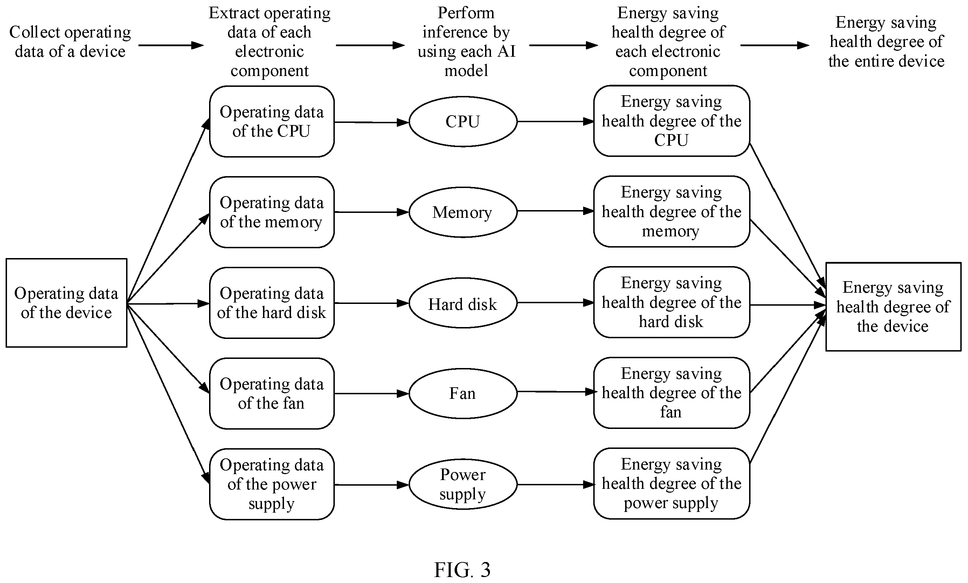

In specific implementation, the data processing apparatus 300 may calculate, based on the process described in the embodiment shown in FIG. 2, energy saving statuses respectively corresponding to multiple electronic components included in a single device at a second layer. It is assumed that the single device includes N electronic components (N is a positive integer). Calculating of the energy saving health degree is used as an example. For example, as shown in FIG. 3, the device may include multiple electronic components such as a CPU, a memory, a hard disk, a fan, and a power supply unit (power supply unit, PSU). In addition, during operating of the device, the multiple electronic components in the device are in an operating state and generate energy consumption. Therefore, the data processing apparatus 300 may calculate an energy saving status of each electronic component based on an operating state of each electronic component.

Then, the data processing apparatus 300 performs weighted summation on the energy saving statuses respectively corresponding to the N electronic components, and calculates an energy saving status of the entire device. The energy saving health degree is used as an example, as shown in FIG. 3. For example, the data processing apparatus 300 may calculate the energy saving health degree of the entire device according to the following formula (9): ${h}_{2} = {\sum }_{i = 1}^{N} {w}_{i} {h}_{i}$ Formula (9)

*h*₂ is the energy saving health degree of the single device; *N* is a quantity of electronic components that generate energy consumption and that are included in the device; *hᵢ* is an energy saving health degree of an *i*^{th} electronic component; and *wᵢ* is a weight corresponding to the *i*^{th} electronic component. A weight corresponding to each electronic component may be preset by a skilled person according to an actual application requirement, for example, preset based on an importance degree or an energy consumption ratio of each electronic component, and configured in the data processing apparatus 300, so that the data processing apparatus 300 performs weighted summation based on the weight and the energy saving health degree of each electronic component to obtain the energy saving health degree of the entire device. In this way, an energy saving health degree of each device at the second layer may be obtained by calculating an energy saving health degree of an electronic component in each device, to implement real-time evaluation of an energy efficiency level of each device.

In addition, after obtaining the energy saving health degree of each device, the data processing apparatus 300 may further perform a corresponding energy saving operation on each device, to improve an energy efficiency level of each device. In specific implementation, for each device, the data processing apparatus 300 may compare the energy saving health degree of the device with a preset threshold. In addition, when the energy saving health degree is greater than or equal to the threshold, the data processing apparatus 300 may not perform an energy saving operation. When the energy saving health degree is less than the threshold, the data processing apparatus 300 may perform an energy saving operation on each electronic component in the device based on the energy saving health degree or the energy saving health degree of each electronic component in the device. For example, the device may include electronic components such as a CPU, a memory, a hard disk, a fan, and a PSU. The data processing apparatus 300 may perform energy saving operations such as dynamic voltage and frequency scaling (dynamic voltage and frequency scaling, DVFS), sleeping, or disabling of a processor core on the CPU; reduce a refresh rate of the memory, for example, reduce the refresh rate of the memory from 2000 MHz (megahertz) to 1300 MHz; reduce a head rotational speed of the hard disk, or switch an operating mode of the hard disk to a sleep mode; reduce a rotational speed of the fan; and switch a power supply mode of the PSU, for example, switch the power supply mode of the PSU from a load balancing mode to an active/standby mode. In an actual test scenario, the energy saving operation is performed on the device based on the energy saving health degree, so that an average energy efficiency level of the device can be improved by more than 10%.

Because the third-layer cluster generally includes one or more devices, energy consumption of the cluster is a sum of energy consumption generated by the one or more devices in the cluster. Therefore, the data processing apparatus 300 may further calculate an energy saving health degree of the cluster based on the calculated energy saving health degree of each device.

For example, the data processing apparatus 300 may calculate the energy saving health degree of the cluster according to the following formula (10): ${h}_{3} = {\sum }_{j = 1}^{M} {w}_{j} {h}_{j}$ Formula (10)

*h*₃ is the energy saving health degree of the cluster; M is a quantity of devices that generate energy consumption and that are included in the cluster; *hⱼ* is an energy saving health degree of a *j*^{th} device; and *wⱼ* is a weight corresponding to the *j*^{th} device. A weight corresponding to each device may be preset by a skilled person according to an actual application requirement, for example, preset based on an importance degree or an energy consumption ratio of each device, and configured in the data processing apparatus 300, so that the data processing apparatus 300 performs weighted summation based on the weight and the energy saving health degree of each device to obtain the energy saving health degree of the entire cluster. In this way, the data processing apparatus 300 can implement real-time evaluation on an energy efficiency level of the cluster.

After obtaining the energy saving health degree of the cluster, the data processing apparatus 300 may further perform a corresponding energy saving operation on the cluster, to improve the energy efficiency level of the cluster. For example, the data processing apparatus 300 may disable a part of devices in the cluster, or adjust a part of devices in the cluster from an operating state to a sleep state, to reduce overall energy consumption of the cluster.

In the embodiment shown in FIG. 2, the data processing apparatus 300 determines the power consumption in the non-energy saving state of the hardware object, and determines the energy saving health degree or the energy saving amount based on the power consumption in the non-energy saving state; and determines the ideal power consumption, and determines the energy consumption amount based on the ideal power consumption. The data processing apparatus 300 may obtain, through inference by using the AI model that has been trained in advance, the ideal power consumption or the power consumption in the non-energy saving state of the hardware object in the current operating state. The following describes in detail a process of training the AI model. The AI model may be trained by the data processing apparatus 300, or the AI model may be obtained through training by another apparatus and then provided to the data processing apparatus 300. For ease of description, the following uses the ideal power consumption and that the data processing apparatus 300 performs the process of training the AI model as examples for description.

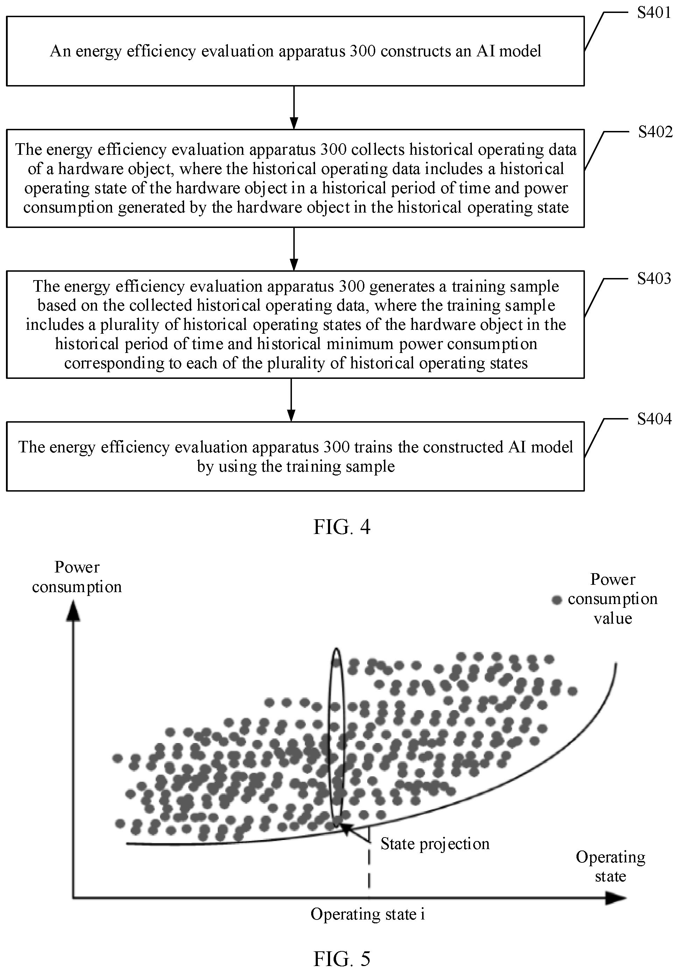

FIG. 4 is a schematic flowchart of a method for training the AI model by the data processing apparatus 300. As shown in FIG. 4, the method includes the following steps.

S401: The data processing apparatus 300 constructs an AI model.

For example, the AI model may be, for example, a model constructed based on a neural network model, for example, a model constructed based on an RNN or a DNN; or the AI model may be a regression tree model or an SVM model.

In another embodiment, the AI model may alternatively be input into the data processing apparatus 300 after being constructed by a user. This is not limited herein.

S402: The data processing apparatus 300 collects historical operating data of a hardware object, where the historical operating data includes a historical operating state of the hardware object in a historical period of time and power consumption generated by the hardware object in the historical operating state.

Further, the historical operating data collected by the data processing apparatus 300 may further include an energy saving control parameter used by the hardware object in the historical operating state, for example, a CPU frequency, a memory frequency, a disk rotational speed, a fan rotational speed, and a power supply mode.

The historical period of time is a past period of time, for example, past 15 days, past 30 days, or past 180 days.

In a possible implementation, a corresponding log may be generated during operating of the hardware object, and the log is used to record a related parameter of the hardware object during operating, for example, an operating state and operating power (and an energy saving control parameter). In this case, the data processing apparatus 300 may obtain the log generated by the hardware object in the historical period of time, and read the historical operating data of the hardware object from the log.

In still another possible implementation, the data processing apparatus 300 may record, during operating of the hardware object, a related parameter of the hardware object during operating, and when a recorded data amount reaches a preset threshold or recorded duration reaches preset duration, the data processing apparatus 300 stops recording data, and uses the recorded data as the historical operating data of the hardware object.

S403: The data processing apparatus 300 generates a training sample based on the collected historical operating data, where the training sample includes multiple historical operating states of the hardware object in the historical period of time and historical minimum power consumption corresponding to each of the multiple historical operating states.

This embodiment provides the following several implementation examples of generating the training sample.

In a first implementation example, the data processing apparatus 300 may traverse the historical operating data, determine the multiple historical operating states of the hardware object in the historical period of time, and further determine one or more pieces of power consumption generated by the hardware object in each historical operating state. Different pieces of power consumption correspond to multiple moments in the historical period of time. For example, in a same historical operating state, power consumption of the hardware object at a moment A is 100 W, power consumption at a moment B is 150 W, and power consumption at a moment C is 300 W, and the multiple pieces of energy consumption are generated by the hardware object under control of multiple groups of energy saving control parameters. Then, for each historical operating state, the data processing apparatus 300 determines minimum power consumption that can be achieved by the hardware object in the historical operating state. For example, the data processing apparatus 300 may compare the power consumption of the hardware object at the moment A, the power consumption at the moment B, and the power consumption at the moment C, and determine, from a comparison result, that the minimum power consumption that can be achieved by the hardware object in the historical operating state is 100 W. In this way, the data processing apparatus 300 may determine minimum power consumption that is of the hardware object and that corresponds to each historical operating state. Then, the data processing apparatus 300 uses the multiple historical operating states as model input, and uses the minimum power consumption corresponding to each historical operating state as a training label of the AI model, to generate the training sample for the AI model.

When the historical operating data obtained by the data processing apparatus 300 further includes the energy saving control parameter, after determining the minimum power consumption corresponding to each historical operating state, the data processing apparatus 300 may further determine an energy saving control parameter corresponding to the minimum power consumption, so that the data processing apparatus 300 uses the multiple historical operating states and the energy saving control parameter corresponding to each historical operating state as model input, and uses the minimum power consumption corresponding to each historical operating state as a training label of the AI model, to generate the training sample for the AI model.

In a second implementation example, each piece of historical operating data obtained by the data processing apparatus 300 includes a historical operating state and an energy saving control parameter, as shown in the following formula (11): ${s}_{i} = \left({s}_{i}^{unc}, {s}_{i}^{ctr}\right)$ Formula (11)

*sᵢ* is an i^{th} piece of historical operating data, ${s}_{i}^{unc}$ is an i^{th} historical operating state, and ${s}_{i}^{ctr}$ is an i^{th} energy saving control parameter.

Then, the data processing apparatus 300 may project historical operating data that has a same historical operating state, to obtain a projection state, as shown in the following formula (12): $\hat{{s}_{ι}} = \left({s}_{i}^{unc},⋅\right)$ Formula (12) $\hat{{s}_{ι}}$ is the historical operating data in the projection state.

Then, the data processing apparatus 300 may traverse and compare, according to the following formula (13), multiple pieces of power consumption that have a same projection state, to determine minimum power consumption in each projection state, that is, determine minimum power consumption that can be achieved by the hardware object in each historical operating state, as shown in FIG. 5: ${p}_{i}^{⋆} = {min}_{{s}_{i}} p \left(\hat{{s}_{ι}}\right)$ Formula (13) ${p}_{i}^{⋆}$ is minimum power consumption that can be achieved in an i^{th} historical operating state. In this embodiment, the power consumption of the hardware object is represented by using power of the hardware object. In another embodiment, the power consumption may also be represented by using parameters such as a voltage and a current. This is not limited herein.

Finally, the data processing apparatus 300 may determine minimum power consumption corresponding to each historical operating state of the hardware object, use the multiple historical operating states as model input, and use the minimum power consumption corresponding to each historical operating state as a training label of the AI model, to generate the training sample for the AI model. Alternatively, the data processing apparatus 300 may use the multiple historical operating states and an energy saving control parameter corresponding to each historical operating state as model input, and use the minimum power consumption corresponding to each historical operating state as a training label of the AI model, to generate the training sample for the AI model.

In this embodiment, an example in which the data processing apparatus 300 generates the training sample based on the historical operating data of the hardware object is used. In another embodiment, the data processing apparatus 300 may alternatively generate the training sample based on other data or in another manner. For example, the training sample may be generated based on test data, or ideal power consumption of the hardware object in each operating state may be set by a skilled person based on experience.

S404: The data processing apparatus 300 trains the constructed AI model by using the training sample.

During specific implementation, the data processing apparatus 300 may input the historical operating state (and the energy saving control parameter) in the training sample into the AI model, and the AI model performs inference based on the sample input and outputs the ideal power consumption. Then, the data processing apparatus 300 may compare the ideal power consumption output by the AI model with the minimum power consumption in the training sample, and adjust a parameter in the AI model based on a deviation between the ideal power consumption and the minimum power consumption, to train the AI model. In this way, the AI model is trained for multiple times based on data such as multiple groups of historical operating states and the minimum power consumption in the training sample, until the AI model completes a training termination condition, for example, the AI model is converged or a quantity of training times reaches a preset quantity of times.

In this way, the data processing apparatus 300 may train the AI model based on the foregoing step S401 to step S404. In this way, the data processing apparatus 300 may implement real-time evaluation on an energy efficiency level of the hardware object by using the AI model.

It should be noted that, when the hardware object is specifically an electronic component, for different electronic components, the data processing apparatus 300 may separately train different AI models, for example, train an AI model 1 for a CPU and train an AI model 2 for a memory, to infer ideal power consumption of different electronic components by using the different AI models.

Further, when the training sample of the AI model is generated based on the historical operating data of the hardware object in the historical period of time, minimum power consumption of the hardware object in a part of the historical operating states may not be minimum power consumption that can be actually achieved by the hardware object in the part of historical operating states. Therefore, when the data processing apparatus 300 uses the AI model to infer ideal power consumption of the hardware object in a current operating state, the ideal power consumption output by the AI model may be further corrected, as shown in the following formula (14): ${p}^{⋆ ⋆} = {p}^{⋆} + δ$ Formula (14)

*p*** is the corrected ideal power consumption; p* is the ideal power consumption output by the AI model, that is, the ideal power consumption before correction; and *δ* is a correction amount, and values of correction amounts corresponding to different operating states may be different.

Correspondingly, the energy saving health degree of the hardware object may be calculated according to the following formula (15): ${h}_{1} = 1 - \frac{p - \left({p}^{⋆}+δ\right)}{p}$ Formula (15)

The correction amount *δ* may be set by a skilled person.

Alternatively, the correction amount *δ* may be dynamically set by the data processing apparatus 300 based on an energy saving health degree of the hardware object within a period of time.

During specific implementation, the data processing apparatus may continuously monitor the energy saving health degree of the hardware object. In addition, when the energy saving health degree of the hardware object is greater than or equal to a threshold, it indicates that an energy saving status of the hardware object is good, and an energy saving operation may not be performed to further improve an energy efficiency level of the hardware object. However, when duration in which the energy saving health degree of the hardware object is greater than or equal to the threshold is greater than first duration, that is, duration in which the energy saving health degree of the hardware object is continuously in a high energy saving health degree interval is long, the ideal power consumption output by the AI model may be high, that is, higher than the minimum power consumption that can actually achieved by the hardware object. In this case, the data processing apparatus 300 may reduce the correction amount, to reduce a value of the ideal power consumption, so that the value of the ideal power consumption used for calculating the energy saving health degree is closer to the minimum power consumption that can be actually achieved by the hardware object, thereby improving accuracy of the calculated energy saving health degree.

When the energy saving health degree of the hardware object is less than the threshold, it indicates that the energy saving status of the hardware object is poor. In this case, the data processing apparatus 300 may perform a corresponding energy saving operation on the hardware object based on the energy saving health degree, to improve the energy efficiency level of the hardware object, and further save energy for the hardware object. However, when duration in which the energy saving health degree of the hardware object is less than the threshold is greater than second duration, that is, duration in which the energy saving health degree of the hardware object is continuously in a low energy saving health degree interval is long, the ideal power consumption output by the AI model may be low, that is, lower than the minimum power consumption that can be actually achieved by the hardware object. In this case, the data processing apparatus 300 may increase the correction amount, to increase a value of the ideal power consumption, so that the value of the ideal power consumption used for calculating the energy saving health degree is closer to the minimum power consumption that can be actually achieved by the hardware object, thereby improving accuracy of the calculated energy saving health degree.

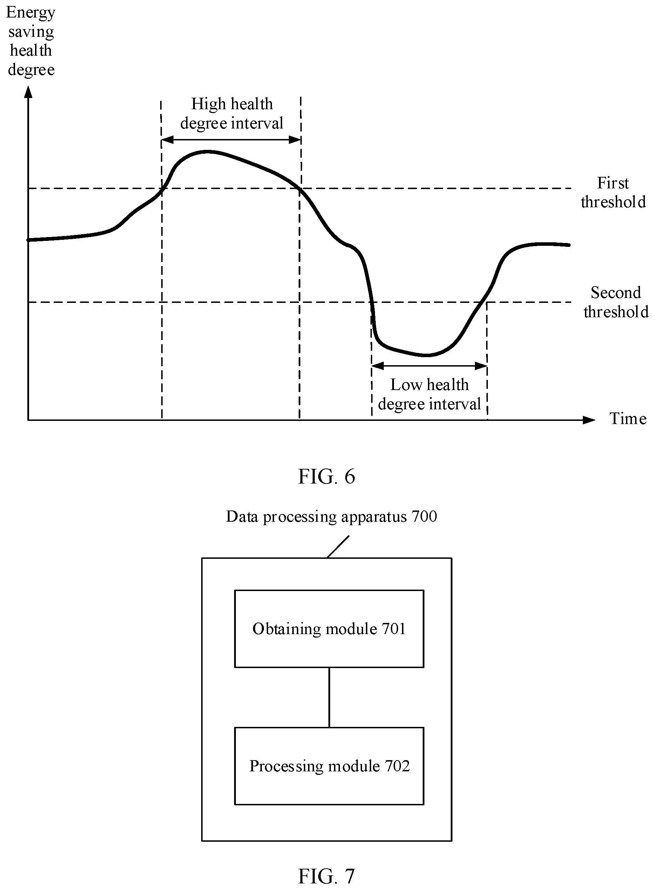

In this way, during operating of the hardware object, after the data processing apparatus 300 continuously adjusts the ideal power consumption output by the AI model, an energy saving health degree change curve that is of the hardware object and that is calculated based on the continuously adjusted ideal power consumption may be shown in FIG. 6.

In an actual application scenario, an adjustment amount of the correction amount of the data processing apparatus 300 may gradually decrease as monitoring duration of the energy saving health degree of the hardware object increases, until to 0, so that the value of the ideal power consumption determined by the data processing apparatus 300 is converged. In this case, accuracy of the energy saving health degree calculated by the data processing apparatus 300 based on the converged ideal power consumption may be continuously maintained at a high level, that is, accuracy of evaluating the energy efficiency level of the hardware object is stably maintained at a high level.

Further, the data processing apparatus 300 may further update the AI model based on the corrected ideal power consumption and the current operating state (and the used energy saving control parameter) of the hardware object, so that accuracy of the ideal power consumption output by the AI model based on the operating state can be improved. In this way, the updated AI model is used to infer the ideal power consumption of the hardware object in each operating state, so that accuracy of the energy saving health degree calculated based on the ideal power consumption can be further improved, and the energy efficiency level of the hardware object can be effectively evaluated.

In this embodiment, the data processing apparatus 300 may not only train, based on the operating power consumption of the hardware object in the historical period of time, to obtain the AI model used to determine the ideal power consumption of the hardware object, so as to implement real-time evaluation on the energy efficiency level of the hardware object by using the AI model, but also improve reliability and credibility of the ideal power consumption obtained through inference by using the AI model, so that the energy saving health degree calculated by the data processing apparatus 300 based on the ideal power consumption output by the AI model can more accurately reflect the energy efficiency level of the hardware object.

In addition, the data processing apparatus 300 may further dynamically adjust the correction amount of the ideal power consumption, so that the determined ideal power consumption is more reliable, and interference caused by a part of factors (for example, the operating power consumption of the hardware object in the historical period of time does not achieve the minimum power consumption that can be actually achieved) to determining the ideal power consumption is reduced, thereby further improving accuracy of the energy saving health degree finally calculated by the data processing apparatus 300, and improving accuracy of measuring the energy efficiency level of the hardware object.

It should be noted that another appropriate step combination that can be figured out by a person skilled in the art based on the content described above also falls within the protection scope of this application. In addition, a person skilled in the art should also be familiar to embodiments described in this specification all belong to example embodiments, and related actions are not necessarily mandatory in this application.

The foregoing describes the data processing method provided in embodiments of this application with reference to FIG. 1A to FIG. 6. The following describes, with reference to the accompanying drawings, a function of a data processing apparatus provided in embodiments of this application and a data processing system for implementing the data processing apparatus.

FIG. 7 is a diagram of a structure of a data processing apparatus. A data processing apparatus 700 includes:
an obtaining module 701, configured to obtain an operating state of a hardware object; and
a processing module 702, configured to obtain information about a digital product passport DPP of the hardware object based on the operating state of the hardware object, where the information about the digital product passport DPP includes at least one of the following target information:
   an energy saving health degree of the hardware object, used to measure an energy efficiency level of the hardware object in the operating state;
   an energy saving amount of the hardware object, used to measure at least one of a power consumption saving amount and an energy saving and carbon reduction amount of the hardware object in the operating state; or
   an energy consumption amount of the hardware object, used to measure at least one of a power consumption level and a carbon consumption amount of the hardware object in the operating state.

In a possible implementation, the information about the digital product passport DPP specifically includes a mapping relationship between an identifier of the hardware object and the target information.

In a possible implementation, the power consumption saving amount is specifically reduction in power consumption of the hardware object in the operating state compared with being in a first state; or
the energy saving and carbon reduction amount is specifically reduction in energy consumption and carbon emission of the hardware object in the operating state compared with being in the first state; or
the power consumption level is specifically a difference of power consumption of the hardware object in the operating state compared with being in a second state; or
the carbon consumption amount is specifically a difference of carbon consumption of the hardware object in the operating state compared with being in the second state; and
the first state is a maximum power consumption state of the hardware object, and the second state is a minimum power consumption state of the hardware object.

In a possible implementation, the operating state is an energy saving measure enabled on the hardware object; and
the processing module 702 is specifically configured to:
obtain the energy saving amount of the hardware object based on an energy saving amount generated by the enabled energy saving measure.

In a possible implementation, the operating state is actual power consumption of the hardware object; and
the processing module 702 is specifically configured to:
obtain the information about the digital product passport DPP of the hardware object based on the actual power consumption and minimum power consumption or maximum power consumption at which the hardware object in the operating state is operable.

In a possible implementation, the operating state is actual power consumption of the hardware object; and
the energy saving health degree is calculated based on the actual power consumption and the minimum power consumption at which the hardware object in the operating state is operable.

In a possible implementation, the energy saving and carbon reduction amount is calculated based on the power consumption saving amount and a carbon emission coefficient; or
the carbon consumption amount is calculated based on the power consumption level and a carbon emission coefficient.

In a possible implementation, the hardware object includes multiple electronic components, the energy saving health degree is an aggregation of energy saving health degrees of the multiple electronic components, the energy saving amount is an aggregation of energy saving amounts of the multiple electronic components, and the energy consumption amount is an aggregation of energy consumption amounts of the multiple electronic components.

In a possible implementation, the apparatus 700 further includes:
a presentation module, configured to present the information about the digital product passport DPP; or
the processing module 702, further configured to store the information about the digital product passport DPP; or
a transceiver module, configured to send the information about the digital product passport DPP to a server or a terminal device; or
the processing module 702, further configured to: when the energy saving health degree is lower than a first threshold, the energy saving amount is lower than a second threshold, or the energy consumption amount is higher than a third threshold, perform an energy saving operation for the hardware object.

In a possible implementation, the transceiver module is further configured to: before obtaining the first information, receive an instruction, where the instruction instructs to generate or query the information about the digital product passport DPP of the hardware object.

Because the data processing apparatus 700 shown in FIG. 7 corresponds to the method shown in FIG. 2, for a specific implementation of the data processing apparatus 700 shown in FIG. 7 and technical effect of the data processing apparatus 700, refer to the related descriptions in the foregoing embodiment. Details are not described herein again.

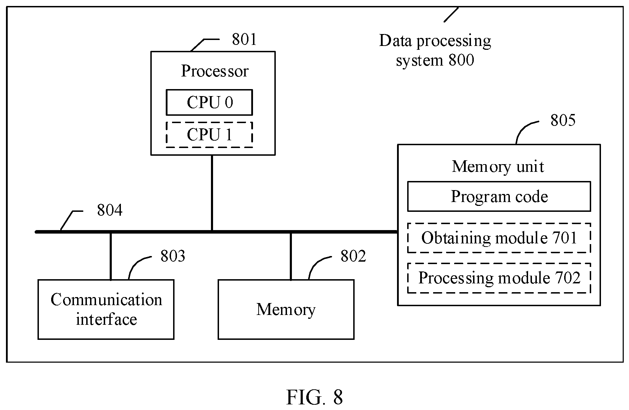

FIG. 8 is a diagram of a data processing system 800 according to this application. The data processing system 800 shown in FIG. 8 can be configured to implement the method steps performed by the data processing apparatus 300 in the embodiment shown in FIG. 2. In actual application, the data processing system 800 may be, for example, a card, a server, or a processor in a server that can run independently. This is not limited in this embodiment. For ease of understanding, the following describes a hardware structure of the data processing system 800 by using an example in which the data processing system 800 is a server.

As shown in FIG. 8, the data processing system 800 includes a processor 801, a memory 802, and a communication interface 803. The processor 801, the memory 802, and the communication interface 803 communicate with each other through a bus 804, or may implement communication in another manner such as wireless transmission. The memory 802 is configured to store instructions, and the processor 801 is configured to execute the instructions stored in the memory 802. Further, the data processing system 800 may further include a memory unit 805, and the memory unit 805 may be further connected to the processor 801, the storage medium 802, and the communication interface 803 through the bus 804. The memory 802 stores program code, and the processor 801 may invoke the program code stored in the memory 802 to perform the following operations:
obtaining an operating state of a hardware object;
obtaining information about a digital product passport DPP of the hardware object based on the operating state of the hardware object, where the information about the digital product passport DPP includes at least one of the following target information:
   an energy saving health degree of the hardware object, used to measure an energy efficiency level of the hardware object in the operating state;
   an energy saving amount of the hardware object, used to measure at least one of a power consumption saving amount and an energy saving and carbon reduction amount of the hardware object in the operating state; or
   an energy consumption amount of the hardware object, used to measure at least one of a power consumption level and a carbon consumption amount of the hardware object in the operating state.

It should be understood that in this embodiment of this application, the processor 801 may be a CPU, or the processor 801 may be another general-purpose processor, a digital signal processor (DSP), an application-specific integrated circuit (ASIC), a field-programmable gate array (FPGA) or another programmable logic device, a discrete gate, a transistor logic device, a discrete device component, or the like. The general-purpose processor may be a microprocessor, any conventional processor, or the like.

The memory 802 may include a read-only memory and a random access memory, and provide instructions and data to the processor 801. The memory 802 may further include a nonvolatile random access memory. For example, the memory 802 may further store information about a device type.

The memory 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 803 is configured to communicate with another device connected to the data processing system 800. In addition to a data bus, the bus 804 may further include a power bus, a control bus, a status signal bus, and the like. However, for clear description, various types of buses in the figure are denoted as the bus 804.

It should be understood that the data processing system 800 according to this embodiment of this application may correspond to the data processing apparatus 700 in embodiments of this application, and may correspond to the data processing apparatus 300 in the method shown in FIG. 2 in embodiments of this application. In addition, the foregoing and other operations and/or functions implemented by the data processing system 800 are separately used to implement corresponding procedures of the method in FIG. 2. For brevity, details are not described herein again.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the foregoing data processing method.

Embodiments of this application further provide a computer program product. The computer program product includes one or more computer instructions. When the computer instructions are loaded and executed on a computing device, the procedures or functions according to embodiments of this application are completely or partially generated.

The computer instructions may be stored in a computer-readable storage medium, or may be transmitted from a computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing data processing method needs to be used, the computer program product may be downloaded and executed on the computing device.

All or a part of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining an operating state of a hardware object; and
obtaining information about a digital product passport DPP of the hardware object based on the operating state of the hardware object, wherein the information about the digital product passport DPP comprises at least one of the following target information:
an energy saving health degree of the hardware object, used to measure an energy efficiency level of the hardware object in the operating state;
an energy saving amount of the hardware object, used to measure at least one of a power consumption saving amount and an energy saving and carbon reduction amount of the hardware object in the operating state; or
an energy consumption amount of the hardware object, used to measure at least one of a power consumption level and a carbon consumption amount of the hardware object in the operating state.

2. The method according to claim 1, wherein the information about the digital product passport DPP specifically comprises a mapping relationship between an identifier of the hardware object and the target information.

3. The method according to claim 1 or 2, wherein
the power consumption saving amount is specifically reduction in power consumption of the hardware object in the operating state compared with being in a first state; or
the energy saving and carbon reduction amount is specifically reduction in energy consumption and carbon emission of the hardware object in the operating state compared with being in the first state; or
the power consumption level is specifically a difference of power consumption of the hardware object in the operating state compared with being in a second state; or
the carbon consumption amount is specifically a difference of carbon consumption of the hardware object in the operating state compared with being in the second state; and
the first state is a maximum power consumption state of the hardware object, and the second state is a minimum power consumption state of the hardware object.

4. The method according to claim 1, wherein the operating state is an energy saving measure enabled on the hardware object; and
the obtaining the information about the digital product passport DPP of the hardware object based on the operating state of the hardware object comprises:
obtaining the energy saving amount of the hardware object based on an energy saving amount generated by the enabled energy saving measure.

5. The method according to any one of claims 1 to 3, wherein the operating state is actual power consumption of the hardware object; and
the obtaining the information about the digital product passport DPP of the hardware object based on the operating state of the hardware object comprises:
obtaining the information about the digital product passport DPP of the hardware object based on the actual power consumption and minimum power consumption or maximum power consumption at which the hardware object in the operating state is operable.

6. The method according to any one of claims 1 to 5, wherein the energy saving and carbon reduction amount is calculated based on the power consumption saving amount and a carbon emission coefficient; or
the carbon consumption amount is calculated based on the power consumption level and a carbon emission coefficient.

7. The method according to any one of claims 1 to 6, wherein the operating state is the actual power consumption of the hardware object; and
the energy saving health degree is calculated based on the actual power consumption and the minimum power consumption at which the hardware object in the operating state is operable.

8. The method according to any one of claims 1 to 7, wherein the hardware object comprises multiple electronic components, the energy saving health degree is an aggregation of energy saving health degrees of the multiple electronic components, the energy saving amount is an aggregation of energy saving amounts of the multiple electronic components, and the energy consumption amount is an aggregation of energy consumption amounts of the multiple electronic components.

9. The method according to any one of claims 1 to 8, wherein the method further comprises:
presenting the information about the digital product passport DPP; or
storing the information about the digital product passport DPP; or
sending the information about the digital product passport DPP to a server or a terminal device; or
when the energy saving health degree is lower than a first threshold, the energy saving amount is lower than a second threshold, or the energy consumption amount is higher than a third threshold, performing an energy saving operation for the hardware object.

10. The method according to any one of claims 1 to 9, wherein before the obtaining the first information, the method further comprises:
receiving an instruction, wherein the instruction instructs to generate or query the information about the digital product passport DPP of the hardware object.

11. A data processing apparatus, wherein the data processing apparatus comprises:
an obtaining module, configured to obtain an operating state of a hardware object; and
a processing module, configured to obtain information about a digital product passport DPP of the hardware object based on the operating state of the hardware object, wherein the information about the digital product passport DPP comprises at least one of the following target information:
an energy saving health degree of the hardware object, used to measure an energy efficiency level of the hardware object in the operating state;
an energy saving amount of the hardware object, used to measure at least one of a power consumption saving amount and an energy saving and carbon reduction amount of the hardware object in the operating state; or
an energy consumption amount of the hardware object, used to measure at least one of a power consumption level and a carbon consumption amount of the hardware object in the operating state.

12. A data processing system, comprising a processor and a memory, wherein
the processor is configured to execute instructions stored in the memory, to enable the data processing system to perform a step in the method according to any one of claims 1 to 10.

13. A computer-readable storage medium, comprising instructions, wherein when the instructions are run on a computing device, the computing device is enabled to perform a step in the method according to any one of claims 1 to 10.

14. A computer program product, comprising instructions, wherein when the instructions are run on a computing device, the computing device is enabled to perform a step in the method according to any one of claims 1 to 10.
